# EUROPÄISCHE PATENTSCHRIFT

(11) **EP 0 934 230 B1**
(45) Veröffentlichungstag und Bekanntmachung des Hinweises auf die Patenterteilung: **21.02.2001**
(21) Anmeldenummer: 97948788.1
(22) Anmeldetag: 23.10.1997
(51) Int. Cl.: C01B 17/82

(54) **VERFAHREN ZUR HERSTELLUNG VON SCHWEFELSÄURE AUS GASEN, DIE SO 3? UND GASFÖRMIGE NITROSYLSCHWEFELSÄURE ENTHALTEN**
PROCESS FOR PREPARING SULPHURIC ACID FROM GASSES CONTAINING SO 3? AND GASEOUS NITROSYLSULPHURIC ACID
PROCEDE DE PREPARATION D'ACIDE SULFURIQUE A PARTIR DE GAZ QUI CONTIENNENT DU SO 3? ET DE L'ACIDE NITROSYLSULFURIQUE GAZEUX

(30) Priorität: 26.10.1996 DE 19644546
(43) Veröffentlichungstag der Anmeldung: 11.08.1999
(73) Patentinhaber: Metallgesellschaft Aktiengesellschaft, 60325 Frankfurt am Main (DE)
(72) Erfinder: WAGNER, Hartmut, D-47447 Moers (DE); FACH, Roland, D-46514 Schermbeck (DE)
(86) Internationale Anmeldenummer: EP9705860
(87) Internationale Veröffentlichungsnummer: WO9818716

(56) Entgegenhaltungen:
- EP-A- 0 191 725
- DE-A- 1 792 348

## Beschreibung

Die Erfindung bezieht sich auf ein Verfahren zur Herstellung von Schwefelsäure aus Gasen, die SO₃ und gasförmige Nitrosylschwefelsäure enthalten, durch Kontaktieren mit hochkonzentrierter Schwefelsäure.

Verfahren zur Herstellung von Schwefelsäure sind bekannt. In Römpps Chemie-Lexikon, 8. Auflage, 1987, Seiten 3760 bis 3764, wird ein Verfahren zur Herstellung von Schwefelsäure beschrieben. Als Rohmaterial wird dabei Schwefeldioxid verwendet, das mit einem Katalysator kontaktiert wird und katalytisch zu SO₃ umgesetzt wird. Das aus dem Kontaktofen abgeführte SO₃ wird anschließend in eine 98 %-ige Schwefelsäure geleitet, wobei zunächst Dischwefelsäure (H₂S₂O₇) gebildet wird, die durch Zusatz von Wasser in Schwefelsäure überführt wird. Auf diese Weise lassen sich besonders hochkonzentrierte Schwefelsäuren sowie verschiedene Oleumsorten gewinnen. Bei diesem Verfahren ist jedoch nachteilig, daß abhängig vom Stickoxidgehalt nach der SO₂-Erzeugung bei der katalytischen Umsetzung von SO₂ zu SO₃ auch Nitrosylschwefelsäure gebildet wird, die ebenfalls in die hochkonzentrierte Schwefelsäure gelangt, und technisch relativ aufwendig entfernt werden muß. In der DE-OS 17 92 348 wird ein Verfahren zur Herstellung von ammoniak- und nitrosefreier Schwefelsäure beschrieben, bei dem vorgesehen ist, die Schwefelsäure mit Hydrazinverbindungen zur Denitrierung zu versetzen. Dieses Verfahren ist jedoch relativ aufwendig und mit relativ hohen Kosten verbunden. In der DE-195 16 303 wird ein Verfahren zur Verringerung des NOₓ-Gehalts in Schwefelsäure beschrieben, bei dem NOₓ mit SO₂ zu N₂ reduziert und N₂ abgeführt wird, wobei also SO₂ zur Denitrierung eingesetzt wird. Bei diesem Verfahren ist nachteilig, daß die in den Absorptionstürmen anfallende Nitrosylschwefelsäure aufgrund der hohen Konzentration der Schwefelsäure nicht entfernt werden kann.

Der Erfindung liegt die Aufgabe zugrunde, ein Verfahren zur Herstellung von Schwefelsäure aus Gasen, die SO₃ und gasförmige Nitrosylschwefelsäure enthalten, durch Kontaktieren mit hochkonzentrierter Schwefelsäure, zu schaffen, bei dem es nicht zur Anreicherung von Nitrosylschwefelsäure in den Absorptionstürmen kommt.

Die der Erfindung zugrunde liegende Aufgabe wird dadurch gelöst, daß die Gase vor dem Kontaktieren mit hochkonzentrierter Schwefelsäure durch mindestens einen Kühler geleitet und auf 160 bis 130°C abgekühlt werden. Unter der Bezeichnung "Nitrosylschwefelsäure" ist das gasförmig vorliegende Nitrosylhydrogensulfat (NO⁺HSO₄⁻ oder HO₃SONO) zu verstehen. Die Konzentration der hochkonzentrierten Schwefelsäure liegt in der Regel zwischen 94 und 98 %. Als Kühler können herkömmliche Gaskühler oder Wärmetauscher, wie beispielsweise Rohrbündelwärmetauscher oder gerippte Rohrschlangenwärmetauscher eingesetzt werden. Es hat sich in überraschender Weise gezeigt, daß die Gase, die SO₃ und gasförmige Nitrosylschwefelsäure enthalten, in mindestens einem Kühler in vorteilhafter Weise abgekühlt werden können, so daß die Nitrosylschwefelsäure aus den Gasen auskondensiert und somit nicht mehr mit der hochkonzentrierten Schwefelsäure im Absorptionsturm in Kontakt kommt. Das nitrosylschwefelsäurehaltige Kondensat kann in vorteilhafter Weise mit dem in der DE-195 16 303 beschriebenen Verfahren denitriert werden.

Eine bevorzugte Ausgestaltung der Erfindung besteht darin, daß die Gase auf 160 bis 150°C abgekühlt werden. Dabei ist vorteilhaft, daß im Kühler fast ausschließlich die Nitrosylschwefelsäure auskondensiert. Da die Gase, die SO₃ und gasförmige Nitrosylschwefelsäure enthalten, in der Regel anteilig auch Wasserdampf enthalten, liegt in der Regel auch immer ein Anteil an gasförmiger Schwefelsäure in den Gasen vor, der bei niedrigeren Kühlertemperaturen zusammen mit der Nitrosylschwefelsäure auskondensieren würde, was jedoch nicht erwünscht ist. Werden die Gase jedoch auf 160 bis 150°C abgekühlt, so ist gewährleistet, daß die gasförmig vorliegende Schwefelsäure nicht mit auskondensiert, sondern anschließend in den Absorptionsturm eingeleitet werden kann.

Gemäß einer weiteren bevorzugten Ausgestaltung der Erfindung ist vorgesehen, daß die Gase nach dem Kontaktieren mit hochkonzentrierter Schwefelsäure zur Anreicherung von SO₃ katalytisch oxidiert werden, anschließend erneut durch mindestens einen Kühler geleitet und auf 160 bis 130°C abgekühlt werden und danach erneut mit hochkonzentrierter Schwefelsäure kontaktiert werden. Dabei ist vorteilhaft, daß die Gase, die aus dem Absorptionsturm abgeführt werden und noch größere Mengen an SO₂ enthalten, erneut für die Herstellung von Schwefelsäure eingesetzt werden können. Ferner wird die Konzentration an SO₂ im Reingas verringert.

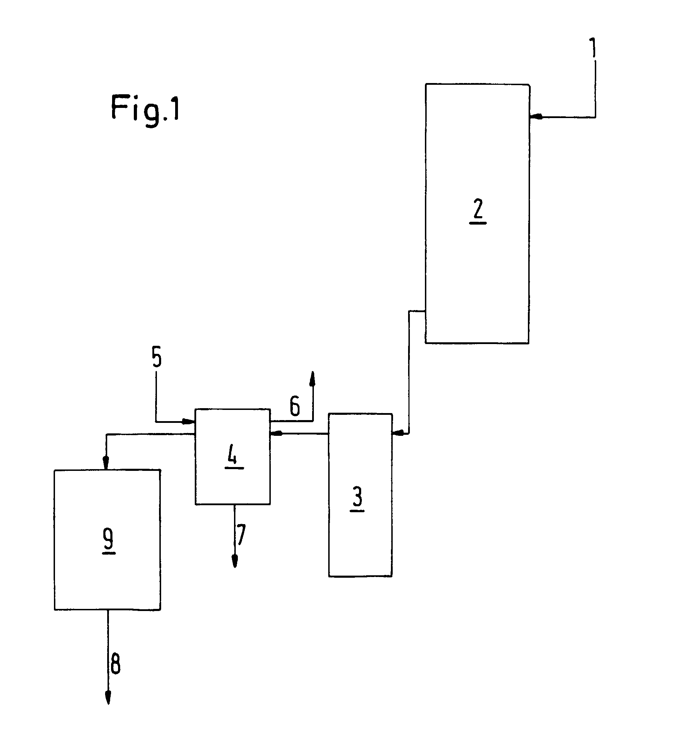

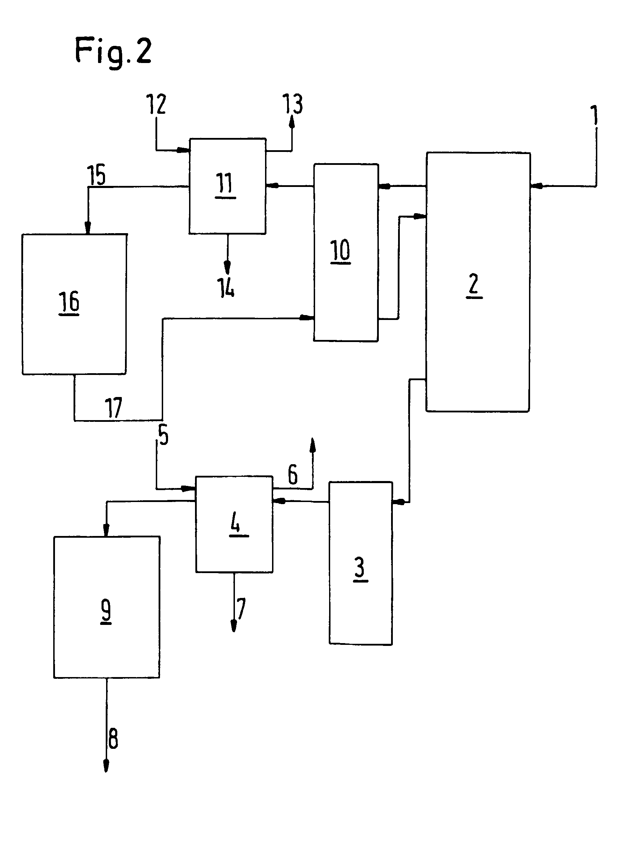

Die Erfindung wird nachfolgend anhand der Zeichnung (Fig. 1 und 2) näher und beispielhaft erläutert:

Fig. 1 zeigt das Verfahrensfließbild des Verfahrens zur Herstellung von Schwefelsäure aus Gasen, die SO₃ und gasförmige Nitrosylschwefelsäure enthalten.

Fig. 2 zeigt das Verfahrensfließbild einer Variante des Verfahrens zur Herstellung von Schwefelsäure aus Gasen, die SO₃ und gasförmige Nitrosylschwefelsäure enthalten.

In Fig. 1 ist das Verfahrensfließbild des Verfahrens zur Herstellung von Schwefelsäure aus Gasen, die SO₃ und gasförmige Nitrosylschwefelsäure enthalten, vereinfacht und beispielhaft dargestellt. Die SO₂-haltigen Gase (1) werden in den Reaktor (2) eingeleitet, in welchem eine Umsetzung des SO₂ zu SO₃ durchgeführt wird. Diese Umsetzung findet bei etwa 500°C statt, wobei als Katalysator beispielsweise Vanadiumpentoxid eingesetzt werden kann. Im Reaktor (2) kommt es jedoch, bedingt durch den Stickoxidgehalt im SO₃-Gas, zur Bildung von Nitrosylschwefelsäure, die dann gasförmig vorliegt. Die Gase, die SO₃ und gasförmige Nitrosylschwefelsäure enthalten, werden aus dem Reaktor (2) abgeführt und durch einen Wärmetauscher (3) geleitet, in welchem eine Vorkühlung der Gase auf 340 bis 250°C stattfindet. Anschließend werden die Gase durch den Kühler (4) geleitet und auf 160 bis 130°C abgekühlt. Als Kühlmedium (5) können ebenfalls Gase eingesetzt werden, die über die Leitung (6) den Kühler (4) verlassen. Die auskondensierte Nitrosylschwefelsäure wird über die Leitung (7) abgeführt. Die von der Nitrosylschwefelsäure befreiten Gase gelangen anschließend in den Absorptionsturm (9), in welchem die Umsetzung von SO₃ zu Schwefelsäure stattfindet, die dann anschließend aus dem Absorptionsturm (9) abgeführt wird (nicht dargestellt). Die Gase verlassen als Reingas den Absorptionsturm (9) über die Leitung (8).

In der Fig. 2 ist eine Variante des Verfahrens zur Herstellung von Schwefelsäure aus Gasen, die SO₃ und gasförmige Nitrosylschwefelsäure enthalten, dargestellt. Die SO₂-haltigen Gase (1) werden zunächst in den Reaktor (2) geleitet, in welchem die Bildung von SO₃ realisiert wird. Gleichzeitig bildet sich gasförmige Nitrosylschwefelsäure. Die Gase, die SO₃ und gasförmige Nitrosylschwefelsäure enthalten, werden einer Vorkühlung in einem weiteren Wärmetauscher (10) unterworfen und gelangen anschließend in den weiteren Kühler (11). Als Kühlmedien (12) können in vorteilhafter Weise Gase eingesetzt werden, die den weiteren Kühler (11) über die Leitung (13) verlassen. Die gasförmige Nitrosylschwefelsäure kondensiert im weiteren Kühler (11) und wird über die Leitung (14) abgeführt. Die von der Nitrosylschwefelsäure befreiten Gase gelangen über die Leitung (15) in den weiteren Absorptionsturm (16), in welchem eine Umsetzung des SO₃ zu Schwefelsäure stattfindet. Die den weiteren Absorptionsturm (16) verlassenden Gase enthalten noch größere Mengen an SO₂ und werden über die Leitung (19) zunächst im Gegenstrom erneut durch den weiteren Wärmetauscher (10) geführt und gelangen anschließend erneut in den Reaktor (2). Im Reaktor (2) erfolgt erneut die Umsetzung des SO₂ zu SO₃, wobei jedoch auch gasförmige Nitrosylschwefelsäure gebildet wird. Die Gase, die SO₃ und gasförmige Nitrosylschwefelsäure enthalten, werden anschließend durch den Wärmetauscher (3) geleitet und erfahren eine entsprechende Behandlung im nachgeschalteten Kühler (4) und Absorptionsturm (9). Das den Absorptionsturm (9) verlassende Reingas enthält lediglich geringe Mengen an SO₂ und wird über die Leitung (8) aus dem System abgeführt.

## Patentansprüche

1. Verfahren zur Herstellung von Schwefelsäure aus Gasen, die SO₃ und gasförmige Nitrosylschwefelsäure enthalten, durch Kontaktieren mit hochkonzentrierter Schwefelsäure, dadurch gekennzeichnet, daß die Gase vor dem Kontaktieren mit hochkonzentrierter Schwefelsäure durch mindestens einen Kühler (4, 11) geleitet und auf 160 bis 130°C abgekühlt werden.

2. Verfahren nach Anspruch 1, dadurch gekennzeichnet, daß die Gase auf 160 bis 150°C abgekühlt werden.

3. Verfahren nach Anspruch 1 oder Anspruch 2, dadurch gekennzeichnet, daß die Gase nach dem Kontaktieren mit hochkonzentrierter Schwefelsäure zur Anreicherung von SO₃ katalytisch oxidiert werden, anschließend erneut durch mindestens einen Kühler (4) geleitet und auf 160 bis 130°C abgekühlt werden und danach erneut mit hochkonzentrierter Schwefelsäure kontaktiert werden.

## Claims

1. Method for producing sulphuric acid from gases which contain SO₃ and gaseous nitrosylsulphuric acid, by contacting with highly concentrated sulphuric acid, characterized in that, before contacting with highly concentrated sulphuric acid, the gases are conducted through at least one cooler (4, 11) and are cooled to 160 to 130°C.

2. Method according to claim 1, characterized in that the gases are cooled to 160 to 150°C.

3. Method according to claim 1 or claim 2, characterized in that, after contacting with highly concentrated sulphuric acid, the gases are catalytically oxidized in order to increase the concentration of SO₃, and are subsequently conducted once again through at least one cooler (4) and cooled to 160 to 130°C and then contacted once again with highly concentrated sulphuric acid.

## Revendications

1. Procédé de préparation d'acide sulfurique à partir de gaz contenant de l'anhydride sulfurique SO₃ et de l'acide nitrosylsulfurique gazeux, par mise en contact avec de l'acide sulfurique très concentré, caractérisé en ce que, avant la mise en contact avec l'acide sulfurique très concentré, les gaz traversent au moins un refroidisseur (4, 11) et sont refroidis à une température de 160 à 130 °C.

2. Procédé selon la revendication 1, caractérisé en ce que les gaz sont refroidis à une température de 160 à 150 °C.

3. Procédé selon la revendication 1 ou 2, caractérisé en ce que, après la mise en contact avec l'acide sulfurique très concentré pour la concentration de SO₂, les gaz sont oxydés catalytiquement, traversent ensuite de nouveau au moins un refroidisseur (4) et sont refroidis à une température de 160 à 130 °C, puis sont mis en contact de nouveau avec de l'acide sulfurique très concentré.
